# EUROPEAN PATENT APPLICATION

(11) **EP 2 014 196 A1**
(43) Date of publication of application: **14.01.2009**
(21) Application number: 07013372.3
(22) Date of filing: 09.07.2007
(51) Int. Cl.: A47C 7/40, B60N 2/72

(54) **Assembly for coupling a seat support structure to a seating means, seat support structure and corresponding manufacturing methods**

(71) Applicant: L&P Swiss Holding Company, 9303 Wittenbach (CH)
(72) Inventor: Martens, Jeroen, 8755 Ruiselede (BE); Pattyn, Jo, 8940 Geluwe-Wervik (BE)
(74) Representative: Banzer, Hans-Jörg

(57) **Abstract**

An assembly for coupling a support structure to a seating means is provided. The assembly comprises a plurality of resilient elements (13, 21, 27) which are coupled with each other via a material portion (14) surrounding a portion of the respective resilient element with positive fitting.

## Description

The present invention relates to an assembly for coupling a seat support structure to a seating means, a seat support structure with such an assembly and corresponding manufacturing methods. A seat support structure, in this respect, generally relates to a structure which is placed in a seating means like a chair, a bench, an automotive seat and the like, for a example in a backrest thereof, to provide resiliency and stability to the seat.

One type of seat support structures is referred to as suspension pad. Such a suspension pad may be a wire structure, wherein for example two lateral side wires are coupled by a plurality of transverse wires. Such a suspension pad is for example described in EP 1 680 984 A1.

Other support structures may comprise plates, grid structures and the like.

Such seat support structures may be mounted to a seat frame for example using springs or other resilient elements in order to provide resiliency for example to a backrest or a seating surface of a corresponding seat. Conventionally, to achieve this the springs or other resilient elements are individually mounted to the seat support structure and to the seat frame, which is a time-consuming process. Furthermore, in such a case the seat support structure and a plurality of separate springs, i.e. a considerable number of single parts, has to be provided.

It is therefore an object of the present invention to provide an assembly of resilient elements like springs which simplifies the installation process and reduces the number of parts. Furthermore, it is an object to provide a corresponding seat support structure and corresponding manufacturing methods.

This object is achieved by an assembly according to claim 1 and a method according to claims 20 and 24. The dependent claims define respective further embodiments of the assembly or of the method and a seat support structure comprising a corresponding assembly.

According to an embodiment, an assembly for coupling a support structure to a seating means is provided, comprising a plurality of resilient elements, and connecting means connecting said plurality of resilient elements, wherein each resilient element of said plurality of resilient elements is fixed to said connecting means by a material portion surrounding a portion of the respective resilient element with positive fitting.

With such an assembly, a plurality of resilient elements may be handled as one piece, such reducing the number of parts and simplifying the manufacturing process when coupling the support structure to a seating means.

Each resilient element of the plurality of resilient elements may comprise a first end to be coupled with said support structure and a second end to be coupled to said seating means. In an embodiment, one of said first ends and of said seconds ends are coupled to said connecting means.

In said assembly, in an embodiment the plurality of resilient elements are arranged in parallel. The resilient elements may be springs, for example coil springs.

The connecting means may be fully or partially formed by a molding process, for example by injecting molding. With such a process, the assembly may be manufactured easily, and the positive fitting (form-fit) may be achieved easily.

The connecting means may be comprise a bar connecting the plurality of resilient elements. The connecting means may be configured to be removed during or after the coupling of the support structure to the seating means or configured to remain in the structure after said coupling.

In another embodiment, the connecting means comprise mounting holes or other attachment aids for connecting the resilient elements to the support structure and/or the seating means. In this case, the connecting means fully or partially remain in the completely manufactured seating arrangement comprising these seating means, the support structure and the resilient elements therebetween.

In another embodiment, the connecting means comprise the support structure itself. In this case, the plurality of resilient elements, for example one end thereof, may be attached to the support structure through a molding process as mentioned above.

For manufacturing such an assembly, the plurality of resilient elements may be placed in a molding form and be at least partially overmolded to form said connecting means.

In an embodiment, two resilient elements intended to be coupled with opposing sides of said support structure are connected, e.g. by a wire, and handled as one piece.

In the following, embodiments of the present invention will be explained with reference to the attached drawings, wherein:
- Fig. 1: shows a first embodiment of an assembly according to the present invention,
- Fig. 2: shows a second embodiment of an assembly of the present invention,
- Fig. 3: shows a third embodiment of an assembly of the present invention,
- Fig. 4: shows a magnified detail of the embodiment of Fig. 3, and
- Fig. 5: shows a fourth embodiment of an assembly according to the present invention.

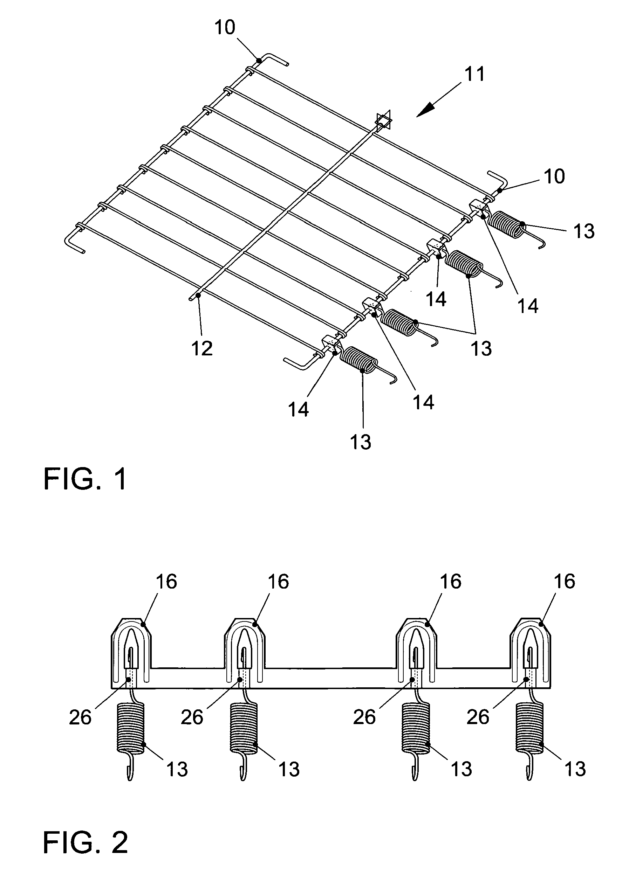

In the following, embodiments of the present invention will be discussed. Fig. 1 shows a first embodiment of an assembly according to the present invention.

In the first embodiment of Fig. 1, a plurality of springs 13 is fixed to a suspension pad. In this embodiment, the suspension pad is formed by two lateral side wires 10 connected by a plurality of transverse wires 11. Furthermore, in the embodiment of Fig. 1 the suspension pad comprises a band 12 interconnecting the transverse wires 11 at a middle portion thereof, which provides additional stability to the suspension pad and maintains a predetermined spacing between transverse wires 11. It should be noted that in other embodiments, band 12 is omitted. In still other embodiments, band 12 is located at an off-center position and/or spans only some of transverse wires 11, and/or more than one band is provided.

Lateral side wires 10 in an embodiment may be plastified wires, whereas transverse wires 11 are metal wires. However, in other embodiments other types of wires may be used as well for forming such a suspension pad.

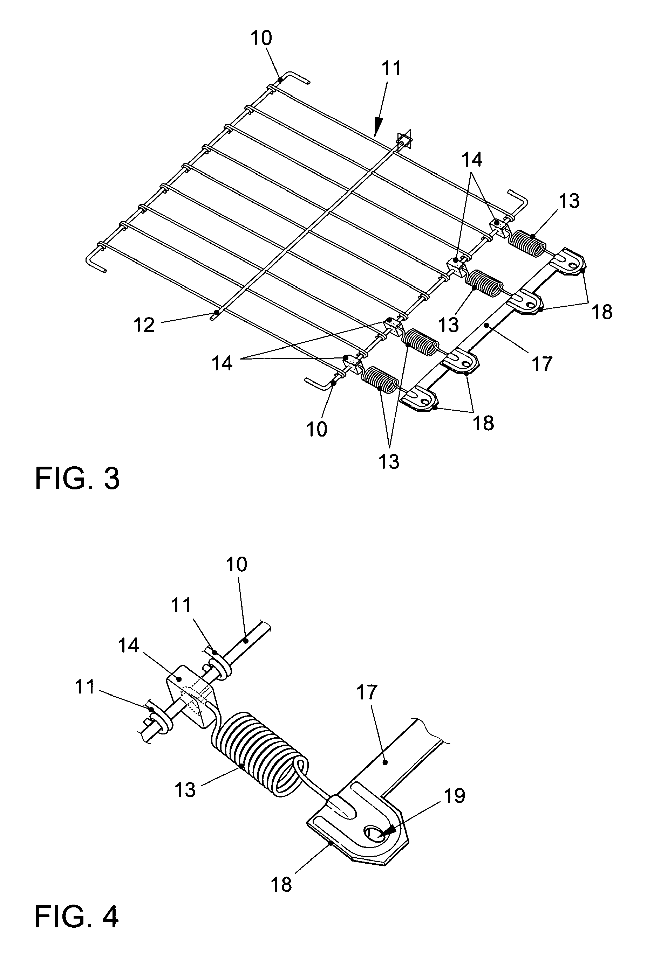

In the embodiment of Fig. 1, springs 13 are fixed to one of the lateral side wires 10 by a molding process like injection molding forming overmolded portions 14. Overmolded portions 14 cover one end of the springs 13 and a portion of the lateral side wire 10 with positive fitting, thus fixing the springs to the suspension pad. Overmolded portions 14 will be described in greater detail later with reference to Fig. 4. It should be noted that while in Fig. 1 springs 13 are fixed to only one of lateral side wires 10, springs may be fixed to both lateral side wires 10 and/or at other positions, e.g. at transverse wires 11.

At their free ends, i.e. the ends not fixed to lateral side wire 10, in the embodiment of Fig. 1 springs 13 are formed into hooks for attaching the springs to a seating means, for example a seat frame of an automotive seat or the like.

While in the embodiment of Fig. 1 four springs 13 are shown, the number and position of the springs may be varied and in particular may be adapted to a corresponding application, for example to the structure of a seat frame to which the suspension pad is to be attached. For example, in other embodiments more or less than four springs with any desired spacing may be used, wherein the number of springs e.g. may be determined by geometry of a corresponding seating means, required comfort, obstructing elements and/or costs.

The assembly of Fig. 1 may be manufactured for example by placing springs 13 together with the suspension pad in a molding form and then form overmolded portions 14 by a molding process like injection molding.

In Fig. 2, a second embodiment of an assembly according to the present invention is shown. In this embodiment, a plurality of springs 13 are arranged in parallel and connected with one end thereof with a bar 15. Bar 15 comprises portions 16 surrounding end portions of springs 13 which extends beyond portions 26 where springs 13 are fixed to bar 15. The ends of springs 13 are in the embodiment of Fig. 2 bent into hooks. In the embodiment shown, the hooks are arranged in a plane essentially perpendicular to a plane defined by bar 15. However, in another embodiment the hooks may have a different orientation.

Similar to the embodiment of Fig. 1, while four springs 13 are shown as an example, any number of springs may be used, and the spacing between the springs may be varied according to the application.

The assembly of the embodiment of Fig. 2 may be manufactured by a molding process. In such an embodiment, the springs 13 may be placed in a molding form in appropriate portions, and bar 15 with the portions 16 may then be formed by a molding process like injection molding, overmolding the springs at the portions 26 thereby fixing springs 13 to bar 15. In this way, springs 13 are fixed to bar 15 at portions 26 where the material of bar 15 in the embodiment shown at least almost surrounds a portion of the corresponding ends of springs 13 with positive fitting, i.e. basically with no space between the material of the bar and the corresponding portion of springs 13.

For coupling a support element like a suspension pad, for example a suspension pad made of lateral side wires and transverse wires as explained with reference to Fig. 1, to a seating means, for example a seat frame of a seat, in an embodiment first the free ends of springs 13 of Fig. 2, i.e. the ends not connected by bar 15, are coupled with one of the support structure and the seating means, and then the end of springs 13 connected by bar 15 are coupled with the other one of the support structure and the seating means. In another embodiment, first the ends of springs 13 connected by bar 15 are coupled with one of the support structure and the seating means, and then the free ends of spring 13 are coupled with the other one of the support structure and the seating means. For coupling springs 13 with the support structure and/or the seating means, the ends of springs 13 formed to a hook may be placed in corresponding opening of the support structure and the seating elements, respectively.

In an embodiment, after this installation, bar 15 is removed. This may in an embodiment be achieved by designing portions 26 such that the springs may separated from bar 15 easily, for example by not fully surrounding the corresponding ends of springs 13 by portions 26 or by providing a weak portion which is broken easily. In another embodiment, bar 15 remains connected with springs 13 after the above-mentioned assembly process, i.e. remains in the seating means provided with the support structure.

In Figs. 3 and 4, a third embodiment of an assembly according to the present invention is shown, wherein Fig. 4 shows a magnified portion of Fig. 3.

The embodiment shown in Figs. 3 and 4 is based on a combination of the embodiments shown in Figs. 1 and 2. Similar to the embodiment of Fig. 1, a plurality of springs 13 is fixed with one end thereof at overmolded portions 14 to a lateral side wire 10 of a suspension pad comprising two lateral side wires 10, a plurality of transverse wires 11 and a band 12. In Fig. 4, overmolded portions 14 may be seen in greater detail. As can be seen in Fig. 4, the corresponding end of spring 13 is formed to a hook shape and hooked onto transverse wire 10. In an embodiment, transverse wire 10 may comprise a slightly bent portion at the location where spring 13 is to be hooked on lateral side wire 10. Then, the hook portion of spring 13 and the corresponding portion of lateral side wire 10 are overmolded with a plastic material to form overmolded portions 14 surrounding the corresponding portions of springs 13 and lateral side wire 10 with positive fitting.

It should be noted that in other embodiments, the end of spring 13 attached to lateral side wire 10 or more general, to a support structure, need not have a hook shape, but may have another suitable shape or be fixed to the support structure by overmolding alone.

In the embodiment of Fig. 1, the overmolded portions 14 may have the same structure as explained above with reference to Fig. 4.

The ends of springs 13 attached to lateral side wire 10 in the embodiment of Fig. 3 in the following will also be designated first ends, whereas the respective other ends of springs 13 will be designated second ends in order to be able to discern between the two ends easily.

In the embodiment of Figs. 3 and 4, the second ends of springs 13 are attached to a bar 17, similar to the embodiment of Fig. 2 where springs 13 are attached to a bar 15. However, the structure of bar 17 of the embodiment of Figs. 3 and 4 differs from the structure of bar 15 of the embodiment of Fig. 2. As in particular may be seen in the magnified view of Fig. 4, the second end of springs 13 are fixed to bar 17 by surrounding the second ends of springs 13 with material of bar 17. In the embodiment of Fig. 4, the second end of spring 13 has a straight form. In another embodiment, the second ends may have a hook form or any other form which is then covered by bar 17.

At portions where these springs 13 are fixed to bar 17, bar 17 on the opposite sides of springs 13 comprises protruding portions 18. In the embodiment of Fig. 4, protruding portions 18 have respective mounting holes 19 for fixing protruding portions 18 and therefore springs 13 and the suspension pad attached thereto to corresponding elements like hooks or pins of a seating means, for example a seat frame of a seat. In the embodiment of Figs. 3 and 4, the protruding portions 18 of bar 17 are therefore used for fixing springs 13 to seating means. After assembly, in such an embodiment bar 17 together with protruding portions 18 remains in the assembled structure. In another embodiment, the portions of bar 17 between the protruding portions 18 may be removed after assembly.

In the embodiment of Figs. 3 and 4, the transverse wires 11 are fixed to the lateral side wires 10 by winding ends of the transverse wires 11 around lateral side wires 10. In other embodiments, other fixation mechanisms may be used, for example by using additional overmolded portions fixing transverse wires 11 to lateral side wires 10. In other embodiments, other support structures like plate-like structures are used instead of the wire structure shown.

The assembly shown in Fig. 3 in an embodiment is manufactured by single molding process, for example injection molding, wherein the suspension pad together with springs 13 is placed in a molding form and overmolded portions 14 and bar 17 are formed by a molding process. In another embodiment, separate molding processes may be used for forming overmolded portions 14 and bar 17.

Similar to the embodiment of Fig. 1, in the embodiment of Fig. 3 springs are shown only on one side of the suspension pad. However, springs may be present on both sides of the suspension pad.

In the embodiments of Figs. 1-4, separate springs are fixed to a bar, to a suspension pad or both. However, the present invention is not limited to springs as resilient elements, and other resilient elements like resilient bands, for example rubber straps, other kind of springs than coil springs, for example wires bent to provide resiliency, may be used as well. Different resilient elements may also be combined.

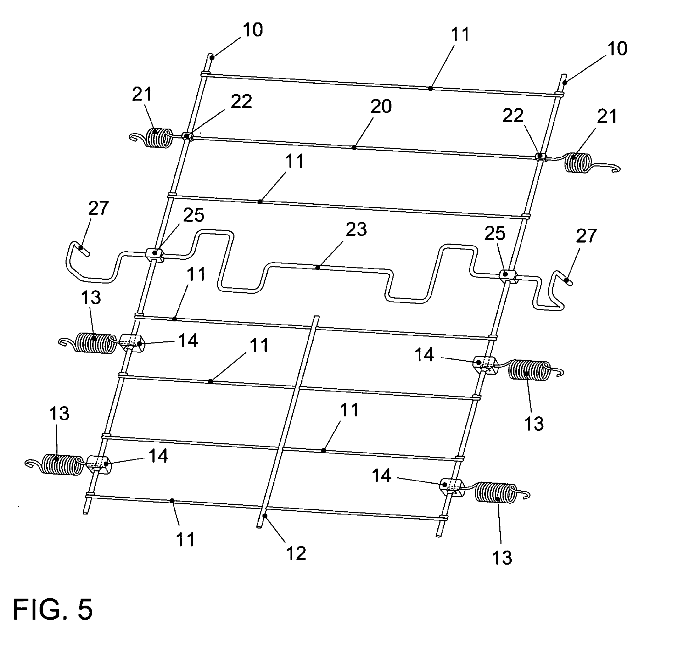

A fourth embodiment of the present invention shown in Fig. 5 illustrates such a combination of different elements. The embodiment of Fig. 5 comprises a suspension pad, said suspension pad comprising two lateral side wires 10 and a plurality of transverse wires 11. Some of transverse wires 11 are additionally interconnected by a band 12 similar to band 12 of the embodiments of Figs. 1 and 3.

Springs 13 are fixed to lateral side wires 10 via overmolded portions 14, as already explained with reference to Figs. 1-4. In the embodiment of Fig. 5, two springs 13 are fixed in this way to each lateral side wire 10.

In the embodiment of Fig. 5 a transverse wire 20 is provided the ends of which extend beyond lateral side wires 10 and are formed into coil springs 21. In the embodiment of Fig. 5, transverse wire 20 is fixed to lateral side wires 10 by overmolded portions 22 which may be manufactured in a similar way as overmolded portions 14. Furthermore, in the embodiment of Fig. 5 a transverse wire 23 is provided which has a bent form comprising a plurality of convolutions and which extends beyond lateral side wires 10 to form portions 27 is provided and is fixed to lateral side wires 10 via overmolded portions 25. Portions 27 are designed such that they provide some resiliency and may also be used for fixing the suspension pad to a seating means. In another embodiment, transverse wires 23 has the same width of the pad. In still another embodiment, additionally or alternatively to portions 27 transverse wire 23 may be formed to serve other functions, e.g. to provide anchoring points or guides for additional elements like electrical wires.

While in the embodiment of Fig. 5 three different resilient elements, namely springs 13, spring ends 21 and bent portions 27, are shown, these three different types of resilient elements may be used independently from each other, and also additionally or alternatively other types of resilient elements may be present.

The assembly of the embodiment of Fig. 5 may be formed using a single molding process for forming overmolded portions 14, 22 and 25, but may also be manufactured using two or more molding steps.

It should be noted that the present invention is not limited to the above-described embodiments, and many modifications are possible within the scope of the present invention. For example, while in the above embodiments a suspension pad comprising lateral side wires and transverse wires has been described as an example, other types of support structures, for example a plate-like element made of plastic or other material, an element made of fabric or a grid-like element may be used, wherein also such an element may be coupled to a seating element, for example a seat frame of a seat or another seat structure, using resilient elements. Also, elements of the embodiments described above may be combined. For example, in the embodiment of Fig. 2 bar 15 may be substituted by a bar formed as bar 17 of the embodiment of Fig. 3 and vice versa. As a matter of course, other forms for elements connecting ends of springs or other resilient elements are also possible.

## Claims

1. An assembly for coupling a support structure to a seating means comprising:
a plurality of resilient elements (13, 21, 27), and
connecting means (10, 15, 17) connecting said plurality of resilient elements (13, 21, 27),
wherein each resilient element (13, 21, 27) of said plurality of resilient elements (13, 21, 27) is fixed to said connecting means (10, 15, 17) by a material portion (14, 22, 25, 26) surrounding a portion of the respective resilient element with positive fitting.

2. The assembly according to claim 1,
wherein said plurality of resilient elements comprises spring elements (13, 21).

3. The assembly according to claim 1 or 2,
wherein said plurality of resilient elements comprises bent wires (27).

4. The assembly according to any one of claims 1-3,
wherein said connecting means comprise a portion (10) of said support structure.

5. The assembly according to claim 4,
wherein said assembly comprises said support structure (10, 11).

6. The assembly according to claim 4 or 5,
wherein said connecting means comprise a lateral side wire (10) of said support structure, said support structure comprising two lateral side wires (10) coupled by a plurality of transverse wires (11).

7. The assembly according to claim 6,
wherein the support structure comprises a further transverse wire (23) which is coupled to said lateral side wires (10) by material portions covering parts of said further transverse wire (23) and said lateral side wires (10).

8. The assembly according to claim 7,
wherein said further transverse wire (23) is bent such that it provides at least one function taken from the group consisting of a function for attaching further elements, a function for attaching the support structure to said seating means and a function to provide resiliency to the support structure.

9. The assembly according to any one of the preceding claims,
wherein said connecting means comprise a bar-shaped element (15, 17).

10. The assembly according to claim 9,
wherein said bar-shaped element (15 , 17) and said material portions (14, 26) are formed in one piece.

11. The assembly according to claim 9 or 10,
wherein said bar-shaped element comprises protruding portions (16, 18) extending from said bar-shaped element at positions opposite to said resilient element (13).

12. The assembly according to any ones of claims 9-11,
wherein said bar-shaped element comprises mounting holes (19).

13. The assembly according to claim 11 and 12,
wherein said mounting holes (19) are arranged in said protrusions (18).

14. The assembly according to any one of claim 9-13,
wherein end portions of said resilient elements (13) extend on both sides of said bar-shaped element (15, 17).

15. The assembly according to any one of the preceding claims,
wherein said material portion (14, 22, 25, 26) is formed by a molded portion.

16. The assembly according to any one of the preceding claims,
wherein said material portion (14, 22, 25, 26) is made of plastic.

17. The assembly according to any one of the preceding claims,
wherein said connecting means (15, 17) is designed to be at these partially removable after coupling said support structure to said seating means.

18. The assembly according to any one of the preceding claims,
wherein two resilient elements (21, 27) are formed in one piece with a connecting portion (20, 23) therebetween, said connecting portion (20, 23) being dimensioned such that said two resilient elements are attachable to opposing sides of said support structure.

19. A seat support structure, comprising:
an assembly according to any one of claims 1-18.

20. A method for manufacturing an assembly for coupling a support structure to a seating means, said method comprising the steps of:
placing a plurality of resilient elements (13, 21, 27) in a molding form, and
overmolding portions of the resilient elements (13, 21, 27) to connect said plurality of resilient elements (13, 21, 27).

21. The method according to claim 20,
wherein said overmolding step comprises forming a bar-shaped element connecting said plurality of resilient elements.

22. The method according to claim 20 or 21, further comprising:
placing at least a portion (10) of said support structure in said molding form,
wherein said overmolding step comprises overmolding portions of said resilient elements to fix said resilient elements (13, 21, 27) to said portion (10) of said support structure.

23. The method according to any one of claims 20-22,
wherein the method is adapted to manufacture an assembly according to any one of claims 1-18.

24. A method for manufacturing a seating element,
comprising at least one of coupling an assembly according to any one of claims 1-18 to a seating means and coupling the assembly according to any one of claims 1-18 to a support structure.

25. The method according to claim 24,
wherein said seating means comprise a seat frame.
